# EUROPEAN PATENT APPLICATION

(11) **EP 4 845 234 A1**
(43) Date of publication of application: **25.11.2026**
(21) Application number: 25178609.1
(22) Date of filing: 23.05.2025
(51) Int. Cl.: H04W 48/18, H04W 36/14, H04W 88/06

(54) **CONNECTION WITH A RADIO ACCESS TECHNOLOGY BASED ON A RADIO RESOURCE CONTROL PROFILE**

(71) Applicant: Nokia Technologies Oy, 02610 Espoo (FI)
(72) Inventor: Jayawardana, Palihawadana Arachchige Dinu Nirmal, 02610 Espoo (FI); Tomala, Malgorzata, 54-511 Wroclaw (PL)
(74) Representative: Richardt Patentanwälte PartG mbB

(57) **Abstract**

The present subject matter relates to a method comprising obtaining radio access information in accordance with a first radio access technology or in accordance with a second radio access technology, the radio access information indicating one or more radio resource control profiles supported in the second radio access technology, each radio resource control profile indicating radio resource control configuration parameters; and requesting from an access node a connection with the access node, the access node , being configured to operate in the second radio access technology, the request indicating a radio resource control profile of the one or more radio resource control profiles for enabling establishment of the connection configured in accordance with at least part of the radio resource control profile.

## Description

### Technical Field

Various example embodiments relate to telecommunication systems, and more particularly to an apparatus for connection with a radio access technology based on a radio resource control profile.

### Background

In modern wireless communication systems, establishing a reliable and efficient connection between an apparatus and a network node may involve a series of protocol-driven procedures governed by the radio resource control (RRC) layer. These procedures may vary in complexity depending on the operational state of the apparatus, the targeted radio access technology, and the available contextual information. To support flexible and scalable connection management, improved mechanisms may be needed.

### Summary

Examples provide an apparatus comprising at least one processor; and at least one memory storing instructions that, when executed by the at least one processor, cause the apparatus at least to: obtain radio access information in accordance with a first radio access technology or in accordance with a second radio access technology, the radio access information indicating one or more radio resource control profiles supported in the second radio access technology, each radio resource control profile indicating radio resource control configuration parameters; request from an access node a connection with the access node, the access node being configured to operate in the second radio access technology, the request indicating a radio resource control profile of the one or more radio resource control profiles for enabling establishment of the connection configured in accordance with at least part of the radio resource control profile.

Examples provide a method comprising: obtaining radio access information in accordance with a first radio access technology or in accordance with a second radio access technology, the radio access information indicating one or more radio resource control profiles supported in the second radio access technology, each radio resource control profile indicating radio resource control configuration parameters; requesting from an access node a connection with the access node, the access node being configured to operate in the second radio access technology, the request indicating a radio resource control profile of the one or more radio resource control profiles for enabling establishment of the connection configured in accordance with at least part of the radio resource control profile.

Examples provide an apparatus configured to operate in accordance with a second radio access technology, the apparatus comprising at least one processor; and at least one memory storing instructions that, when executed by the at least one processor, cause the apparatus at least to: receive a request of a connection from another apparatus, the request indicating a radio resource control profile supported in the second radio access technology; enabling the connection configured in accordance with at least part of the radio resource control profile.

Examples provide a method comprising: receiving by an apparatus configured to operate in accordance with a second radio access technology a request of a connection, the request indicating a radio resource control profile supported in the second radio access technology; enabling the connection configured in accordance with at least part of the radio resource control profile.

Examples provide an apparatus configured to operate in accordance with a first radio access technology, the apparatus comprising at least one processor; and at least one memory storing instructions that, when executed by the at least one processor, cause the apparatus at least to: send in accordance with the first radio access technology to another apparatus radio access information, the radio access information indicating one or more radio resource control profiles supported in a second radio access technology, each radio resource control profile indicating radio resource control configuration parameters.

Examples provide a non-transitory computer readable medium comprising program instructions that, when executed by an apparatus, cause the apparatus to perform any of the methods described herein.

Examples provide a computer program product comprising processor executable instructions for causing an apparatus to perform any of the methods described herein.

"First," "Second," etc. as used herein, these terms are used as labels for nouns that they precede, and do not necessarily imply any type of ordering (e.g., spatial, temporal, logical) unless explicitly defined as such.

### Brief Description of the Drawings

The accompanying figures are included to provide a further understanding of examples, and are incorporated in and constitute part of this specification. In the figures:
FIG.1 is a flowchart of a method for enabling connection with a different radio access technology based on a radio resource control profile in accordance with an example of the present subject matter;
FIG. 2 is a signaling diagram illustrating a procedure for connection setup by a user equipment (UE) in a wireless communication system supporting a first radio access technology and a second radio access technology, in accordance with an example of the present subject matter;
FIG. 3 is a signaling diagram illustrating a procedure for connection setup by a user equipment in a wireless communication system supporting a first radio access technology and a second radio access technology, in accordance with an example of the present subject matter;
FIG. 4 is a table showing an example of radio resource control configuration parameters associated with a default radio resource control profile in accordance with an example of the present subject matter;
FIG. 5 is a table listing multiple radio resource control profiles and indicating their configuration derivation relative to the default radio resource control profile in accordance with an example of the present subject matter;
FIG. 6A is a schema defining the structure of the radio resource control setup request message in accordance with an example of the present subject matter;
FIG. 6B is a mapping table associating enumerated establishment cause values with specific radio resource control profiles in accordance with an example of the present subject matter;
FIG. 7A is a schema defining the structure of the radio resource control setup request message in accordance with an example of the present subject matter;
FIG. 7B is a table describing the semantic interpretation of selected profile selection values in accordance with an example of the present subject matter;
FIG. 8 is a schema extension of the radio resource control setup request message in accordance with an example of the present subject matter;
FIG. 9A is a schema defining the resume cause information element used in radio resource control resume request messages in accordance with an example of the present subject matter;
FIG. 9B is a table mapping resume cause spare values to profile selection identifiers in accordance with an example of the present subject matter;
FIG. 10 is a schema for the radio resource control resume request message in accordance with an example of the present subject matter; and
FIG. 11 is a block diagram showing an example of an apparatus according to an example of the present subject matter.

### Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may enable an apparatus in a wireless communication system to establish a connection with a different radio access technology based on a predefined radio resource control profile. This approach may address the challenge of allowing an apparatus operating in one radio access technology to seamlessly benefit from the capabilities of another by leveraging profile-based signaling mechanisms. In particular, a specific radio resource control profile, reflecting the configuration parameters suitable for the target technology, may be indicated and applied already during an initial radio resource control setup procedure. The advantage of this solution may lie in its ability to reduce signaling complexity, avoid redundant negotiation phases, and accelerate the setup of control and data plane connectivity.

The wireless communication system comprises nodes such as base stations, wherein each node may serve devices located within the node's geographical area of service. The wireless communication system may support one or more radio access technologies (RATs). A radio access technology of the radio access technologies may, for example, be evolved universal terrestrial radio access (E-UTRA), 5G new radio (NR), or a 6G based system, but it is not limited to, as a person skilled in the art may apply the present subject matter to other wireless communication systems provided with necessary properties. The device may refer to an equipment that connects to and communicates with the wireless communication system to access services and applications provided by the wireless communication system. The device may, for example, be a user equipment. The device may, for example, comprise any one of: a mobile phone, a tablet, an Internet of things (IoT) device, or a laptop.

An apparatus may be provided. The apparatus may be provided for operation in the wireless communication system. The apparatus may, for example, comprise a user equipment or any communication-capable device such as an IoT device, a vehicle-mounted terminal, or a sensor module. The apparatus may be configured to communicate wirelessly with one or more nodes, such as a base station or access point, using one or more wireless radio access technologies of the wireless communication system.

The apparatus may be configured to obtain radio access information in accordance with a first radio access technology or in accordance with a second radio access technology. The apparatus may be configured to obtain the radio access information in accordance with a radio access technology may mean that the apparatus is capable of receiving, decoding, and/or interpreting the radio access information as defined and transmitted according to the radio access technology. This process may be referred to as acquisition operation. The radio access information may, for example, comprise system information or redirection information. The radio access information may be referred to as such because it may pertain specifically to aspects of accessing a radio interface of the wireless communication system, such as frequency configuration, cell identity, synchronization parameters, or access control settings.

The radio access information indicates one or more radio resource control profiles supported in the second radio access technology. Each radio resource control profile indicates radio resource control configuration parameters. The radio access information may, for example, be provided as a data structure comprising one or more entries corresponding to the respective radio resource control profiles. Each entry of the entries may comprise the corresponding profile, for example, in the form of its set of configuration parameters, or, alternatively, a reference to the corresponding profile, such as a profile identifier, a pointer to a profile stored in the network or the apparatus, or an index referencing the profile. Alternatively, the radio access information may comprise metadata enabling the apparatus to derive the one or more radio resource control profiles from the metadata.

The one or more radio resource control profiles are supported in the second radio access technology may mean that the second radio access technology defines, recognizes, or is capable of operating in accordance with the one or more radio resource control profiles. The one or more radio resource control profiles may, for example, be provided in accordance with specifications of the second radio access technology, wherein radio resource control configuration parameters of the one or more radio resource control profiles may be applied for enabling communication by the apparatus in accordance with the second radio access technology.

The radio access information may be provided in accordance with a context in which the apparatus has been connected to the wireless communication system in accordance with the first radio access technology or the second radio access technology.

The apparatus may be configured to obtain the radio access information by receiving it from a node of the wireless communication system. The node from which the radio access information is received may be referred to as a first access node if the radio access information is obtained according to the first radio access technology. Alternatively, the apparatus may retrieve the radio access information from locally stored data, such as pre-provisioned configuration files or previously stored information from a prior connection. Alternatively, the apparatus may derive the radio access information based on broadcast system information or from metadata. Alternatively, the apparatus may be configured to obtain the radio access information by receiving it from a node of the wireless communication system that operates in the second radio access technology.

The apparatus may be configured to store the radio access information, meaning that the apparatus may keep the radio access information in a memory element, e.g., in a permanent or semi-permanent storage such as non-volatile memory, allowing the radio access information to be retained across power cycles or reboots for future use.

In one example, the one or more radio resource control profiles may comprise multiple distinct radio resource control profiles, each tailored to a specific operational context. One profile may be assigned to support a more operationally demanding configuration, while another profile may be associated with power-saving behavior. A further profile may correspond to the initial provision of mobile broadband (MBB) services, and yet another may be defined for low-latency and high-reliability communication. Additionally, a separate profile may be designated for a specific user equipment type, such as a low-power device operating in a wide-area low-bandwidth environment.

The apparatus may be configured to request from an access node, referred to as second access node, a connection with the second access node, wherein the second access node is configured to operate in the second radio access technology. The second access node may be a node of the wireless communication system. The second access node is configured to operate in, or in accordance with (or operates in), the second radio access technology may mean that the second access node is capable of transmitting and/or receiving signals, performing procedures, and supporting protocols as defined by the second radio access technology. The connection of the apparatus with the second access node may refer to a connection between the apparatus and the second access node, or to a connection of the apparatus to the second access node. This process may be referred to as a profile-based connection operation. The request indicates a radio resource control profile of the one or more radio resource control profiles for enabling establishment of the connection configured in accordance with at least part of radio resource control profile. The radio resource control profile indicated by the request may be referred to as specific radio resource control profile.

The specific radio resource control profile may, for example, indicate how radio resources may be allocated and used with the apparatus, including, for example, logical channel mappings, signal modulation parameters, power control configurations, and physical channel usage.

The inclusion of the specific radio resource control profile in the request may enable the second access node to configure a connection setup process in accordance with at least part of the radio resource control profile. This may ensure compatibility between the apparatus's expected behavior and a network's control plane configuration. This profile-based connection customization may reduce signaling overhead support faster connection setup and allow networks to apply context-aware or apparatus-optimized control strategies.

Based on the specific radio resource control profile, the second access node may be configured to establish the connection to the apparatus by using predefined configuration parameters associated with that specific radio resource control profile. Depending on this, some connection signaling between the apparatus and the second access node may not be needed, or at least some configuration-related operations may be reduced or omitted. In any case, this may reduce connection setup latency and improve resource efficiency during the profile-based connection procedure.

According to one example, the apparatus may be configured to perform a cell reselection of a cell served by the second access node for synchronization with the cell.

In one example, before performing the profile-based connection operation, the apparatus may be in an inactive state or idle state. The active state and inactive state may also be referred to as active mode and inactive mode, respectively. In these states, the apparatus may have suspended or released its connection to the first radio access technology or to the second access technology. The apparatus may be configured to perform a cell reselection of a cell in order to camp on that cell for subsequent connection establishment. The cell in the cell reselection procedure may be a cell of the second radio access technology, which may have been reselected due to its presence in the neighborhood of the first access node or based on measurement and cell selection criteria. Alternatively, the cell, in the cell reselection procedure, which may be a cell served by the second access node in accordance with the second radio access technology, may be dictated or indicated by the radio access information previously acquired by the apparatus. The cell reselection of the cell may comprise the apparatus synchronizing with that cell's timing and frequency for further communication. Upon performing the cell reselection of the cell, the apparatus may be configured to perform the profile-based connection operation. Alternatively, to these reselection-based procedures, the apparatus may be configured to perform the profile-based connection operation following a redirection command or an explicit handover instruction received from the first access node, thereby enabling a transition toward the second access node without relying on cell reselection through apparatus autonomous transition to connection-less state. This may, for example, mean that a handover may control the connection from the first access node operating on the first radio access technology to the second access node operating on the second radio access technology, without apparatus transition to RRC_IDLE state.

In one example, the acquisition operation may be performed while the apparatus is connected to the first access node, or alternatively may be performed as a separate process, e.g., as a preprocessing step for the profile-based connection operation. The profile-based connection operation may, for example, be performed either automatically or autonomously by the apparatus, or alternatively be triggered by, for example, the second access node.

For example, the profile-based connection operation may enable the apparatus to transition from the inactive state or idle state to a connected state. For example, the inactive state may be RRC_INACTIVE state and the idle state may be RRC_IDLE state.

The first radio access technology and the second radio access technology may each refer to respective wireless communication technologies that enable access to a radio network by the apparatus, wherein the two technologies may be based on different system architectures, protocol frameworks, or standard generations. The first radio access technology may be different from the second radio access technology. For example, the first radio access technology may correspond to a legacy or current-generation system such as 5G NR, while the second radio access technology may correspond to a more advanced, next-generation system such as a 6G based system. The first and second radio access technologies may operate independently or cooperatively within a multi-RAT deployment.

The present subject matter may thus enable the apparatus, such as a 5G user equipment, to establish a connection with a different radio access technology, such as a 6G based system, based on a predefined radio resource control profile. This approach may address the challenge of how a UE operating in one RAT (e.g., 5G) can seamlessly benefit from the capabilities of a different RAT (e.g., 6G) by leveraging profile-based signaling mechanisms. In particular, the present subject matter may enable the UE to coordinate with the network such that a specific RRC profile, reflecting the configuration parameters suitable for the target RAT, may be indicated and applied already during the initial RRC Setup procedure.

According to one example, the apparatus may be configured to: obtain from the first access node configured to operate in the first radio access technology the radio access information in at least one of the following: a broadcast system information message, a radio resource control reconfiguration message, or a radio resource control release message or other dedicated signalling. The first access node is configured to operate in, or in accordance with (or operates in), the first radio access technology may mean that the first access node is capable of transmitting and/or receiving signals, performing procedures, and supporting protocols as defined by the first radio access technology. In this context, the term "obtain" refers to the reception of the radio access information. Each of the mentioned message types may correspond to a standard signaling mechanism defined by the first radio access technology for distributing configuration data: broadcast system information may typically be used for disseminating cell-wide parameters; radio resource control reconfiguration and release messages may be used for dynamic or transition-related updates; and dedicated signaling may provide targeted information for specific apparatuses. This approach may enable the apparatus to receive the radio access information proactively or reactively through standardized and already existing signaling channels, minimizing additional signaling overhead while improving interoperability and multi-RAT coordination.

In one example implementation, the apparatus may first obtain general radio access information via the broadcast system information message and subsequently receive more detailed or updated information through the radio resource control reconfiguration message. This two-stage granularity may, for example, enable the broadcast message to provide basic or default-level information to all UEs, while the radio resource control reconfiguration message may enable targeted refinement or supplementation based on the UE's current connection context, device capabilities, or service profile.

In one example implementation, the apparatus may receive initial radio access information through the broadcast system information message, and then additional or redirective radio access information embedded within the radio resource control release message. This combination may support efficient transition planning toward the second radio access technology.

In one example implementation, the apparatus may obtain an initial set of radio access information in the radio resource control reconfiguration message and then receive complementary information in the radio resource control release message. This pairing may allow for active-session delivery of detailed configurations.

In one example implementation, the apparatus may receive initial information via the broadcast system information message, detailed configuration updates through the radio resource control reconfiguration message, and transition guidance or final selection criteria in the radio resource control release message. This complete chain may ensure that the apparatus is consistently informed throughout its lifecycle in the first radio access technology. This may reduce the risk of configuration loss or ambiguity across state transitions.

According to one example, the radio access information further indicates access assistance information to identify the second access node, wherein the apparatus may be configured to request the connection using the access assistance information.

The apparatus may be configured to read the access assistance information in order to determine, obtain, or extract an identity or characteristic of the second access node, such as its frequency, cell identifier, or access technology type. This may enable the apparatus to accurately target the appropriate node for connection establishment. The access assistance information may refer to any data element that facilitates the discovery, selection, or addressing of the second access node, which operates according to the second radio access technology; this may include, for example, a frequency, cell identifier, network identifier, or access point name. The term "identify" may imply that the apparatus may distinguish or locate the second access node in a manner that enables connection initiation. By embedding such information in the radio access information, the apparatus may gain the ability to proactively and accurately target the appropriate second access node when requesting a connection. This may improve connection efficiency and reduce discovery latency.

According to one example, the apparatus may be configured to receive from the first access node a redirection indication to the second access node and perform the request of the connection based on the redirection indication. The redirection indication may refer to signaling information instructing the apparatus to transition its connection attempt from the current (first) radio access technology to a target (second) radio access technology, typically by specifying parameters such as the target frequency, cell identifier, or access system type. The term "redirection" may denote a controlled mechanism in which the first access node explicitly guides the apparatus toward an alternative access node. By using this redirection indication, the apparatus may efficiently initiate connection establishment with the second access node using the provided information. This may avoid unnecessary scanning and ensure a smoother and more coordinated user experience across heterogeneous network layers.

According to one example, the apparatus may be configured to receive from the first access node the redirection indication in the radio resource control release message for releasing a connection between the apparatus and the first access node. The redirection indication, when included in this resource control release message, provides the apparatus with information about the second access node, such as its frequency, cell ID, or radio access technology type, thereby instructing the apparatus where to direct its next connection attempt. This dual-purpose use of the radio resource control release message may both end the current session and facilitate a seamless transition to another network layer or system. The embedding the redirection indication in the radio resource control release message may minimize signaling overhead and latency by combining connection release and redirection in a single operation.

According to one example, the apparatus may be configured to: before performing the request: initiate an access procedure with the second access node if the apparatus is in an inactive mode without having previously established a connection with the access node or is in an idle mode. For example, this initiation of the access procedure may be performed after the apparatus has reselected the cell served by the second access node.

The access procedure may refer to a set of operations required to initiate communication with a cell, including, for example, a random access procedure. The random access procedure may, for instance, include the physical random access channel (PRACH). However, this access procedure may not be needed if the apparatus has already established a context with the second access node, such as when the apparatus is in an inactive state following a prior connected or idle state under that same second radio access technology. In such cases, the apparatus may be able to resume communication without performing a full access procedure.

According to one example, the specific radio resource control profile is indicated as a default profile in the radio access information.

The specific radio resource control profile may refer to a preselected or predesignated profile that the apparatus may use without requiring further negotiation or selection logic, serving as a baseline configuration for initiating communication under the second radio access technology. This may simplify the decision-making process and ensure consistency in behavior across different apparatuses or deployment scenarios.

According to one example, the apparatus may be configured to: select the specific radio resource control profile in accordance with criteria defined in the radio access information. For example, the selection of the specific radio resource control profile may be performed in order to perform the request of the connection. The selection may refer to the process by which the apparatus identifies one profile from a set of predefined radio resource control profiles, and criteria may include conditions such as service type, UE category, subscription class, priority indicators, or network-specified selection rules. The radio access information serves as a source of guidance or policy for enabling the apparatus to make an informed and context-aware selection of the appropriate configuration profile. This may allow the apparatus to autonomously align its connection behavior with network expectations and service requirements.

In one example, the criteria may be provided implicitly by presenting the radio resource control profiles in a ranked and indexed order. The indexing of the radio resource control profiles may reflect their relative operational characteristics, where a higher index value corresponds to a more operationally demanding configuration. For instance, a radio resource control profile associated with emergency services may be assigned index 1, a profile for high-priority access may be given index 2, a power-saving profile may be indexed as 3, a profile for the initial provision of mobile broadband (MBB) services may be indexed as 4, a profile for low latency and high reliability may be assigned index 5, and another profile may be designated for specific UE types, such as devices operating in low-power wide-area bandwidth conditions.

According to one example, the apparatus may be configured to perform the request by at least sending a radio resource control setup message or sending a radio resource control resume request message to the second access node.

The radio resource control setup message may refer to a message sent by the apparatus to initiate the establishment of a new radio resource control connection with the second access node, typically following a successful random access procedure in RRC_IDLE state, whereas the radio resource control resume request message may be used when the apparatus is in RRC_INACTIVE state and seeks to resume a previously suspended radio resource control connection by reactivating stored context.

Both message types may serve to initiate or reestablish control-plane connectivity with the network and are selected based on the apparatus's current radio resource control state. The advantage of supporting both procedures may be that it may enable the apparatus to efficiently adapt to its connection state and context availability, allowing for faster reconnection in the case of RRC_INACTIVE state via resume, or complete setup from scratch when required.

According to one example, the apparatus may be configured to: in response to sending the radio resource control setup request message, receiving from the second access node a radio resource control setup message and in response thereto sending a radio resource control setup complete message to the second access node.

In this context, the radio resource control setup request message is used by the apparatus to initiate a new radio resource control connection, e.g., in RRC_IDLE state. The radio resource control setup request message may indicate the specific radio resource control profile. The radio resource control setup message from the second access node may contain configuration parameters including security, bearer setup, and resource allocation which may be defined based on the specific radio resource control profile. The radio resource control setup complete message sent by the apparatus may confirm successful application of the configuration and finalize the connection establishment. This three-step sequence may indicate that the request by the apparatus is rather a procedure for establishing the radio resource control connection, allowing both the apparatus and the second access node to transition into an operational control state. This may enable seamless integration with existing connection setup frameworks defined by the second radio access technology, while still making use of the specific radio resource control profile to tailor the connection behavior. The fact that the specific profile is used may reduce signaling complexity and ensure that the resulting configuration aligns with predefined service or deployment requirements.

In one example, the radio resource control setup message may indicate that the second access node confirms the specific radio resource control profile initially selected by the apparatus. Alternatively, the second access node may provide, in the radio resource control setup message, another radio resource control profile selected from the one or more radio resource control profiles. The apparatus may be configured to operate in accordance with the confirmed or newly assigned profile, and this selection may be indicated as a confirmation in the radio resource control setup complete message transmitted by the apparatus. This may enable to finalize the profile-based connection configuration in a consistent and synchronized manner.

According to one example, the apparatus may be configured to: in response to sending the radio resource control resume request message receiving from the second access node a radio resource control resume message and in response thereto sending a radio resource control resume complete message to the second access node.

The radio resource control resume request message may be used by the apparatus, e.g., in RRC_INACTIVE state, to resume a previously suspended radio resource control connection without performing a full connection setup. The radio resource control resume request message may indicate the specific radio resource control profile. The radio resource control resume message from the second access node may confirm acceptance of the resume procedure and may provide updated configuration parameters. The radio resource control resume complete message sent by the apparatus may acknowledge the configuration and complete the transition back to RRC_CONNECTED state.

In one example, the radio resource control resume message may indicate that the second access node confirms the specific radio resource control profile initially selected by the apparatus. Alternatively, the second access node may provide, in the radio resource control resume message, another radio resource control profile selected from the one or more radio resource control profiles. The apparatus may be configured to operate in accordance with the confirmed or newly assigned profile, and this selection may be indicated as a confirmation in the radio resource control resume complete message transmitted by the apparatus. This may enable to finalize the profile-based connection configuration in a consistent and synchronized manner.

The apparatus may be configured to transmit messages to and receive messages from the first and second access nodes using wireless communication over radio frequency signals. For example, such transmission and reception may be performed through an antenna system integrated in or connected to the apparatus, enabling the exchange of signaling and data in accordance with the respective radio access technologies supported by the wireless communication system.

According to one example, the specific radio resource control profile is encoded either as a value within an existing establishment cause information element in the request, or as a value of a dedicated information element included in the request. In another example, the specific radio resource control profile may be encoded as a value within an existing resume cause information element in the request. The process according to these examples may be referred to as encoding operation.

The establishment cause information element may indicate the reason or context for initiating a radio resource control connection (e.g., mobile-originated data, emergency call), and reusing it to carry profile-related values may allow for compact signaling without introducing additional fields. Alternatively, a dedicated information element may be used to explicitly convey the identifier or characteristics of the specific radio resource control profile. The term "encoded" may refer to the inclusion of profile-related data in a format interpretable by both the apparatus and the second access node, enabling correct selection and application of the corresponding configuration. Using the existing establishment cause field may support backward compatibility and signaling efficiency, while the dedicated information element may allow for enhanced expressiveness and future extensibility.

According to one example, the apparatus may be configured to: send the request in a single message.

The term single message may refer to the transmission of the request within a unified signaling message, without requiring multiple sequential exchanges. This design may simplify the communication process by reducing the number of signaling steps between the apparatus and the second access node. By contrast to the three-step sequence, the second access node in this case may not require an additional signaling exchange, as it may use the specific radio resource control profile indicated in the single message to directly derive the necessary configuration for establishing the connection. This may be possible because the apparatus may have already provided all relevant context and configuration intent within the initial message. Furthermore, the procedure may complete with implicit or protocol-defined confirmation, since the second access node may treat the reception of the single, profile-aware message as a complete and self-contained trigger for establishing the connection, thereby eliminating the need for further negotiation or explicit acknowledgment from the apparatus. This may contribute to faster setup and reduce signaling load.

According to one example, the second access node may be configured to: receive the request from the apparatus and enable the connection with the apparatus, wherein the connection is configured in accordance with at least part of the specific radio resource control profile.

Enabling the connection may refer to setting up or resuming a radio resource control connection by applying all or part of the configuration parameters associated with the specific radio resource control profile. The specific radio resource control profile may serve as a predefined or network-recognized template defining aspects of the control-plane behavior. This may allow the second access node to rapidly establish or resume connections in a consistent and scalable manner, with minimal negotiation and reduced signaling.

According to one example, the second access node may be configured to further operate in accordance with the first radio access technology. In this context, operating in accordance with both radio access technologies may refer to the capability of the second access node to support signaling, resource management, and bearer establishment procedures conforming to both RATs, such as 5G and a 6G based system. This may enable the second access node to act as a multi-RAT entity.

In an example implementation where the apparatus is a UE, at a given point in time, the UE, after being connected to the first access node that operates in accordance with the first access technology, may be in a state that enables it to connect to the second access node operating in accordance with a second access technology that is different from the first access technology.

If the UE is in RRC_IDLE state, it may autonomously perform cell reselection to identify the cell associated with the second access node, e.g., by evaluating assistance information, broadcasted system information block (SIB) parameters, redirection command and signal measurements. After camping on the cell of the second access node, the initial access procedure (e.g., through PRACH) may be triggered autonomously by the UE or, for example, by the second access node, e.g., when the UE needs to send uplink data or respond to paging. After this initial access procedure, the UE may perform the profile-based connection operation in order to connect to the second access node.

If the UE is in the RRC_INACTIVE state, the UE may autonomously perform cell reselection. In this case, the initial access procedure may not be required if the UE's context is already available at the second access node, such as due to context transfer during a prior transition. Otherwise, the initial access procedure may be performed by the UE either autonomously or triggered, for example, by the second access node. After either the reselection or the initial access procedure, the UE may perform the profile-based connection operation to connect to the second access node.

If the UE is in a state in which a handover may control the connection from the first access node operating in accordance with the first radio access technology to the second access node operating in accordance with the second radio access technology e.g., without requiring the apparatus to transition to the RRC_IDLE state, then cell reselection by the UE may not be necessary. The initial access procedure may or may not be performed, depending on whether the UE's context is available at the second access node. Thereafter, the UE may perform the profile-based connection operation to connect to the second access node.

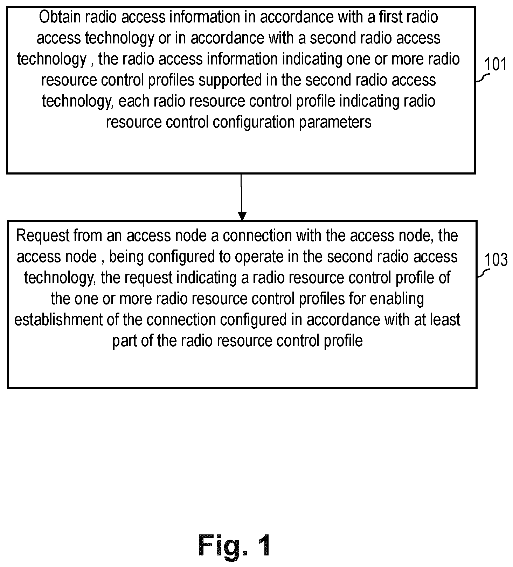

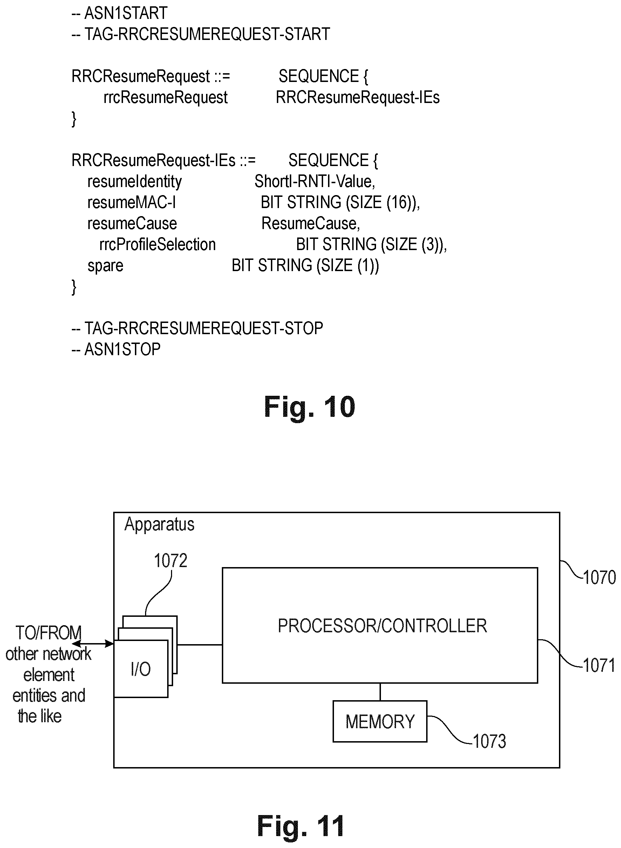

**FIG. 1** is a flowchart of a method for enabling connection with a different radio access technology based on a radio resource control profile in accordance with an example of the present subject matter. The method of FIG. 1 may, for example, be performed by a first apparatus such as the apparatus of FIG. 11.

In block 101, radio access information may be obtained in accordance with a first radio access technology or in accordance with a second radio access technology, the radio access information indicating one or more radio resource control profiles supported in the second radio access technology, each radio resource control profile indicating radio resource control configuration parameters.

In block 103 a request a connection with an access node may be performed from the access node, the access node, being configured to operate in the second radio access technology, the request indicating a radio resource control profile of the one or more radio resource control profiles for enabling establishment of the connection configured in accordance with at least part of the radio resource control profile.

The operation in block 101 may refer to the acquisition operation and the operation in block 103 may refer to the profile-based connection operation.

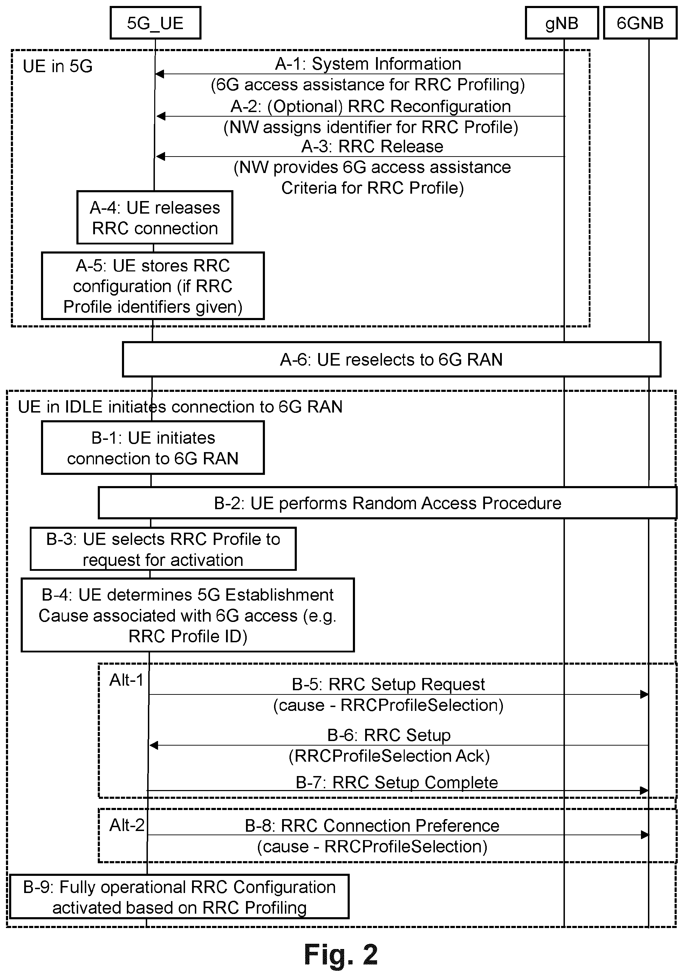

**FIG. 2** is a signaling diagram illustrating a procedure for connection setup by a UE in a wireless communication system supporting, as a first radio access technology, 5G, and as a second radio access technology, 6G. The first radio access technology is represented by a 5G base station, also referred to as a next generation node B (gNB), and the second radio access technology is represented by a 6G access node, also referred to as a 6GNB. The procedure illustrates how the UE, initially operating under the control of the 5G gNB, may obtain access assistance and radio resource control profile information and subsequently perform a transition or initiate a connection to the 6G RAN, using profile-based signaling mechanisms to enable efficient and context-aware RRC configuration during the connection setup process.

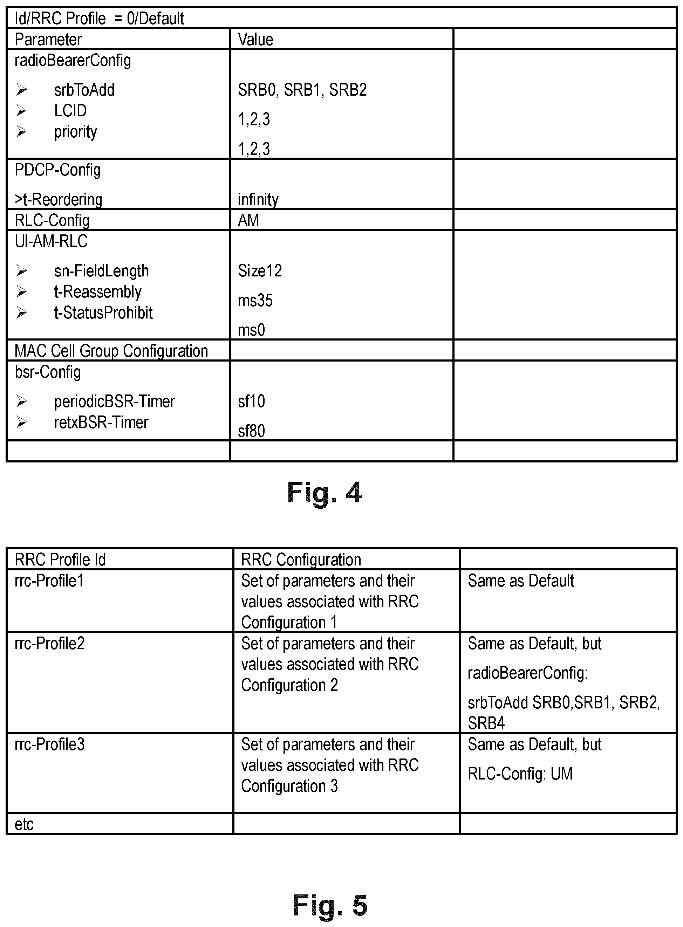

In the illustrated procedure, a 5G RAN (gNB) may broadcast system information (A-1), such as access6GAssistanceInfo, which includes 6G or multi-RAT cell frequency bands or identifiers (e.g., absolute radio frequency channel numbers (ARFCNs)) that help identify the target access node. The ARFCN may, for example, include physical cell id and carrier frequency. This information may also include RRC profiling information such as default RRC profile support, associated with standard-defined default configuration parameter values (e.g., the table of FIG. 4), or differentiated RRC profiles (e.g., RRC profile 1, 2, 3) linked to distinct configuration sets and potentially mapped to UE types, such as emergency services (e.g., RRC Profile 1).

Optionally, as shown in step A-2, the 5G RAN may send an RRC Reconfiguration message to provide RRC profiling information with detailed information on different RRC profiles and associated configuration parameters.

Alternatively, or additionally, the 5G RAN may send an RRC release message (A-3) containing the same or complementary information to the information obtained in step A-1, by adding to 6G access assistance information redirection information. For instance, the 5G RAN may provide to which 6G cell or frequency the UE may redirect after transitioning from connected state and which RRC profile may be used in each of the selected cells. Also, the 5G RAN may provide additional criteria for selecting each RRC profile in the RRC release message, such as priorities of the cells of profiles. Upon reception of this message, the UE may release the 5G RRC connection (A-4) and store any provisioned RRC profiling information in the messages of steps A-1 through A-3 for future use (A-5). Subsequently, the UE may reselect to the 6G RAN or multi-RAT system that supports 6G RAN specific RRC configuration profiling (A-6).

Steps A-1 through A-6 may provide an example implementation of the acquisition operation.

In step B-1, the UE is in IDLE mode and may initiate connection to the 6G RAN. The UE performs a random access procedure (B-2) to the 6G RAN. Next, the UE selects an RRC profile (B-3), using information acquired during step A-1, A-2, or A-3. If no explicit information is available, the UE may select a default RRC profile for basic RRC configuration parameters activation. The selection may thus reflect either the default profile (per table of FIG. 4) or differentiated profiles (e.g., RRC profile 1, RRC profile 2, or RRC profile 3) based on UE category, service type, or deployment context (per table of FIG. 5). The UE may select the RRC profile based on the information provided to the UE at step A-1 or step A-2 or step A-3. The information provided to the UE at step A-1, A-2 or A-3 may contain default RRC profile support associated with configuration parameters values defined as default configuration in standard (such as in the table of FIG. 4), or RRC profiles information that differentiates between different RRC profiles (e.g. RRC Profile 1, RRC Profile 2 or RRC Profile 3 that are associated with different configurations parameters sets and may be linked to different UE types such as RRC Profile 1 for emergency (as in the table of FIG. 5). Based on this information and considering the UE type or category and/or service type for which the UE is initializing the connection, UE may select either the default RRC profile or RRC Profile 1, RRC Profile 2 or RRC Profile 3.

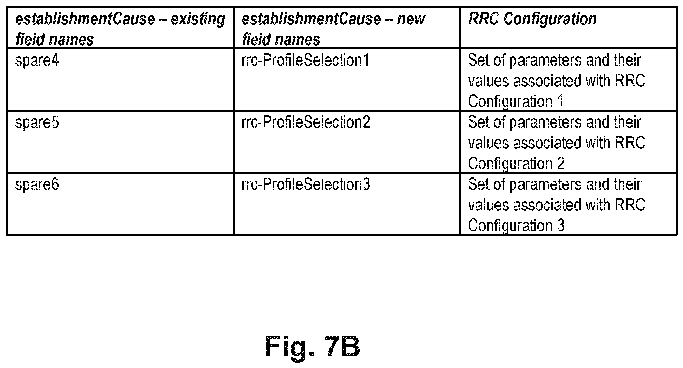

The UE determines (B-4) RRC establishment cause value based on previously received information and RRC based selection criteria for the cause. This RRC layer based on access stratum stored, acquired or default configuration, associates the cause with indication that implies the connection request concerns a query for applying specific RRC configuration associated with a profile. This refers to RRC layer based cause derivation to access 6G RAN. Indeed, after selecting the preferred profile, the UE may select the establishment cause associated with the selected profile based on the table of FIG. 7B. For example, if the UE has decided to select RRC Profile 2, the establishment cause in (B-4) RRC setup or resume request may be set to rrc-ProfileSelection2.

The UE may then transition from RRC_IDLE state to RRC_CONNECTED state through one of two alternatives. In alternative Alt-1, the UE sends an RRC setup request with the establishment cause indicating profile selection (B-5), receives (B-6) an RRC setup message from the 6G RAN confirming the RRC profile section of the UE for initial access. Alternatively, the 6G RAN may indicate a different RRC profile for activation or send a new profile configuration to the UE for activation and storage. The UE sends an RRC setup complete message to acknowledge activation (B-7) of the indicated profile configuration. In alternative Alt-2, a unidirectional setup approach may be used, where the UE indicates RRC profile selection directly in the connection preference request (B-8). For example, the UE may send a RRC setup or connection request in step B-8 which is indicating the RRC profile selection in the establishment cause, as its suggestion and preference to apply RRC configuration. The 6G RAN may activate the fully operational RRC configuration (B-9).

Steps B-1 through B-7 and B-9 may provide an example implementation of the profile-based connection operation. Alternatively, Steps B-1 through B-4 and B-8 through B-9 may provide an example implementation of the profile-based connection operation.

In another realization, for transitioning the UE from RRC_INACTIVE state to RRC_CONNECTED state, the UE might have: performed initial access, including 6G assistance information acquisition, stored the configuration on RRC profiling, and stored the RRC profiling in the RRC context information for further resume of the connection.

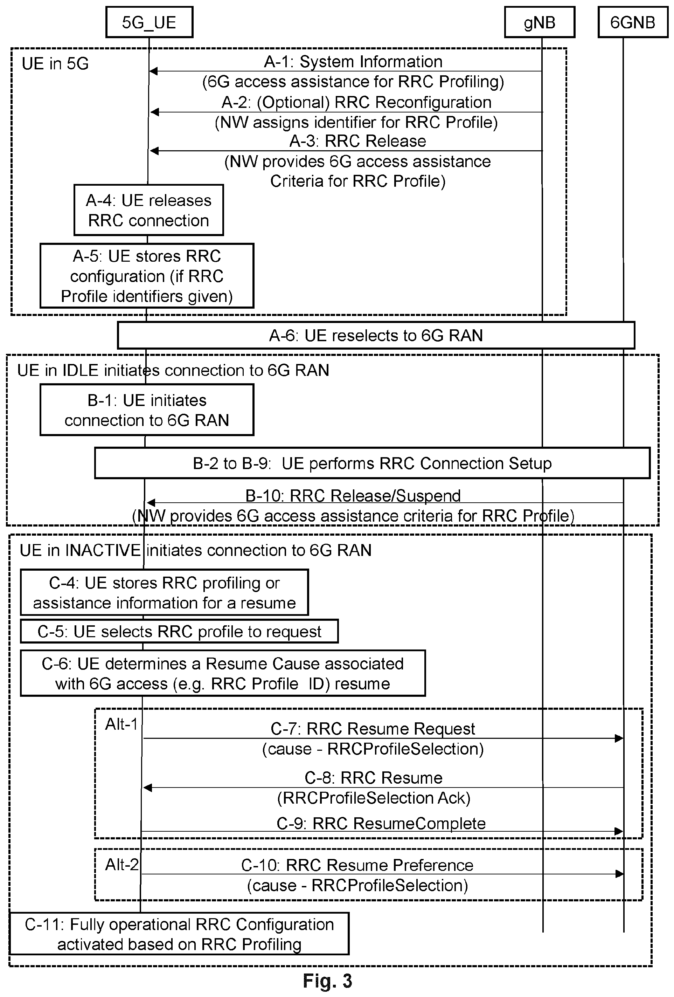

**FIG. 3** is a signaling diagram illustrating a procedure for connection setup by a UE in a wireless communication system supporting, as a first radio access technology, 5G, and as a second radio access technology, 6G. The first radio access technology is represented by a 5G base station, also referred to as a gNB, and the second radio access technology is represented by a 6G access node, also referred to as a 6GNB. The procedure illustrates how the UE, initially operating under the control of the 5G gNB, may obtain access assistance and radio resource control profile information and subsequently perform a transition or initiate a connection to the 6G RAN, using profile-based signaling mechanisms to enable efficient and context-aware RRC configuration during the connection setup process.

Steps A-1 to A-6 and B-1 to B-9 in the diagram correspond to the signaling steps outlined in FIG. 2. In step B-10, the RRC release or suspend message is sent to the UE to release the RRC connection, and similarly to step A-3, this message may carry assistance information for further access, including redirection and RRC profiling details. This information, along with any other previously provided assistance data, is intended to be stored by the UE.

In step C-4, the UE stores the RRC profiling or access assistance information in its inactive RRC context for use when resuming a connection to the 6G RAN. In step C-5, the UE selects the RRC profile to be used for resuming the RRC connection; this selection may be based on information received previously in step A-1, step A-2, step A-3, or step B-10 (RRC release message to the UE with the same information or complementary to A-1).

In step C-6, the UE determines RRC resume cause value based on previously received information and RRC based selection criteria for the cause. This RRC layer decision to derive the cause based on access stratum stored, acquired or default configuration, associates the cause with an indication that implies the connection resume concerns a query for applying specific RRC configuration associated with a profile.

The UE may then initiate an RRC procedure to resume the RRC_CONNECTED state according to one of two alternatives. In alternative Alt1, the UE sends an RRC resume request including the selected RRC profile in the resume cause (C-7). The 6G RAN sends the RRC resume message to the UE confirming the RRC profile section of the UE for initial access. Alternatively, the 6G RAN could indicate a different RRC profile for activation or send a new profile configuration to the UE for activation and storage. The UE sends (C-9) the RRC resume complete acknowledging the activation of the indicated profile configuration.

In alternative Alt2, a unidirectional procedure is used to resume RRC_CONNECTED state. The UE sends a RRC resume query or RRC resume preference which is indicating RRC profile selection in the resume cause, as its suggestion and preference to apply RRC configuration (C-10), upon which the UE proceeds to activate the fully operational RRC configuration associated with the indicated profile (C-11).

Steps C-4 through C-9 and C-11 may provide an example implementation of the profile-based connection operation. Alternatively, Steps C-4 through C-6 and C-10 through C-11 may provide an example implementation of the profile-based connection operation.

**FIG. 4** is a table illustrating a radio resource control profile identified as Profile 0 or the default profile in accordance with an example of the present subject matter.

The radio resource control profile includes parameters across multiple protocol layers used in the radio access stack. Under the radio resource control parameter radioBearerConfig, the radio resource control profile specifies the addition of signaling radio bearers SRBO, SRB1, and SRB2, with logical channel identifiers (LCID) 1, 2 and 3 and priority values assigned as 1, 2, and 3 respectively. The radio resource control parameter PDCP-Config defines a reordering timer with a value of infinity, indicating that no reordering timeout is applied. In the radio resource control parameter RLC-Config, the radio resource control profile specifies an acknowledged mode (AM) operation for the RLC layer, with a length of the sequence number (SN) field, sn-FieldLength (Size12), and t-Reassembly timer (35 milliseconds), and t-StatusProhibit timer (0 milliseconds). Furthermore, the radio resource control parameter MAC Cell Group Configuration includes bsr-Config parameters, where the periodic buffer status report timer is set to subframe 10 (sf10) and the retransmission buffer status report timer is set to subframe 80 (sf80). This predefined and structured configuration may enable consistent default behavior for the UE when no specific profile selection is made or when default connectivity settings may be required.

**FIG. 5** is a table illustrating a set of example radio resource control profiles, each identified by a distinct RRC profile ID and associated with a corresponding configuration.

Each profile consists of a defined set of parameters and values that may modify or extend the default RRC configuration e.g., as described with reference to FIG. 4. For instance, the radio resource control profile rrc-Profile1 reuses the same configuration as the default radio resource control profile without modification. The radio resource control profile rrc-Profile2 also builds upon the default radio resource control profile but introduces a variation in the radioBearerConfig parameter, specifically by extending the srbToAdd list to include SRB4 in addition to SRBO, SRB1, and SRB2. Meanwhile, the radio resource control profile rrc-Profile3 follows the default radio resource control profile but replaces the RLC-config parameter with unacknowledged mode (UM) instead of acknowledged mode (AM). This table illustrates how multiple radio resource control profiles may be defined to support differentiated behaviors and use cases by adjusting only selected aspects of the radio resource control profile.

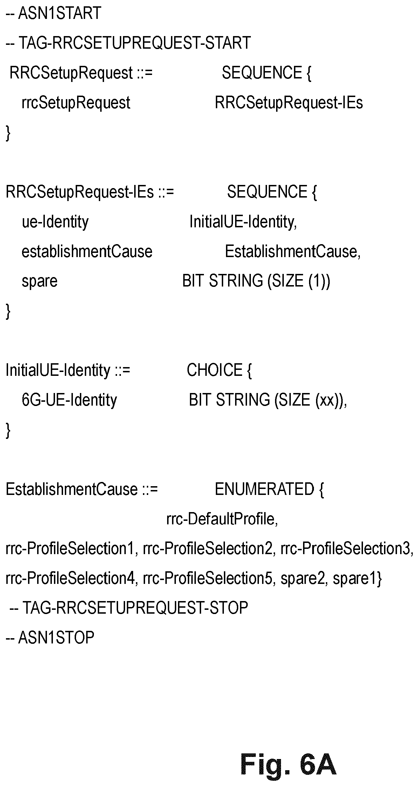

**FIG. 6A** presents an example of an encoding schema for the radio resource control setup request (RRCSetupRequest) message in accordance with an example of the present subject matter. The RRCSetupRequest message may, for example, be used for performing the profile-based connection operation. For example, the RRCSetupRequest message may be used by a user equipment to initiate the establishment of an RRC connection with a 6G network. FIG. 6A may provide an example implementation of the encoding operation.

The RRCSetupRequest message may be transmitted using the signaling radio bearer SRBO, employ the TM mode of the RLC service access point, and may be carried on the common control channel (CCCH) in the uplink direction.

The structure begins with the RRCSetupRequest root element, defined as a sequence of information elements (RRCSetupRequest-IEs). The RRCSetupRequest-IEs sequence includes three fields: ue-Identity of type InitialUE-Identity, establishmentCause of type EstablishmentCause, and a spare field defined as a one-bit bit string. The InitialUE-Identity is defined as a choice type and includes a 6G-UE-Identity, encoded as a bit string of a certain size. The EstablishmentCause is defined as an enumerated type, allowing the UE to indicate the intended RRC profile for connection setup, with possible values such as rrc-DefaultProfile, rrc-ProfileSelection1, rrc-ProfileSelection2, rrc-ProfileSelection3, and up to rrc-ProfileSelection5, as well as reserved fields spare2 and spare1. This structured encoding enables compact and extensible signaling for profile-based connection establishment in 6G systems.

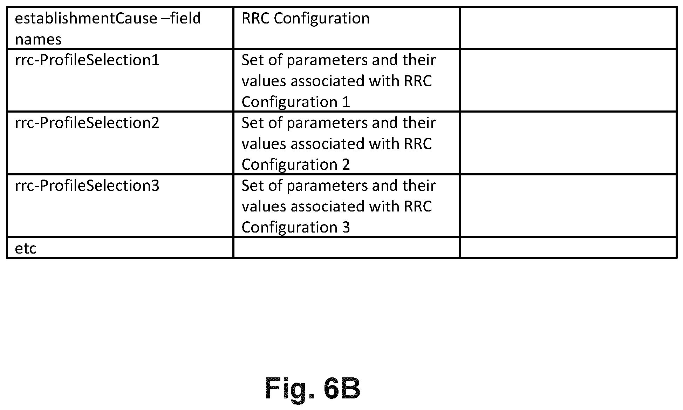

**FIG. 6B** presents a table that provides example semantic interpretations of the EstablishmentCause values defined in the schema of FIG. 6A, specifically in relation to their association with predefined radio resource control configurations.

Each enumerated value, such as rrc-ProfileSelection1, rrc-ProfileSelection2, and so forth, is mapped to a corresponding RRC configuration, indicating that when a UE includes a particular establishment cause in the RRCSetupRequest message, it is implicitly requesting the activation of a specific RRC profile. For instance, rrc-ProfileSelection1 would trigger the application of RRC Configuration 1, and similarly for the other profile selections. This mapping enables the network to interpret the UE's connection request not merely as a generic access attempt but as one informed by profile-based intent.

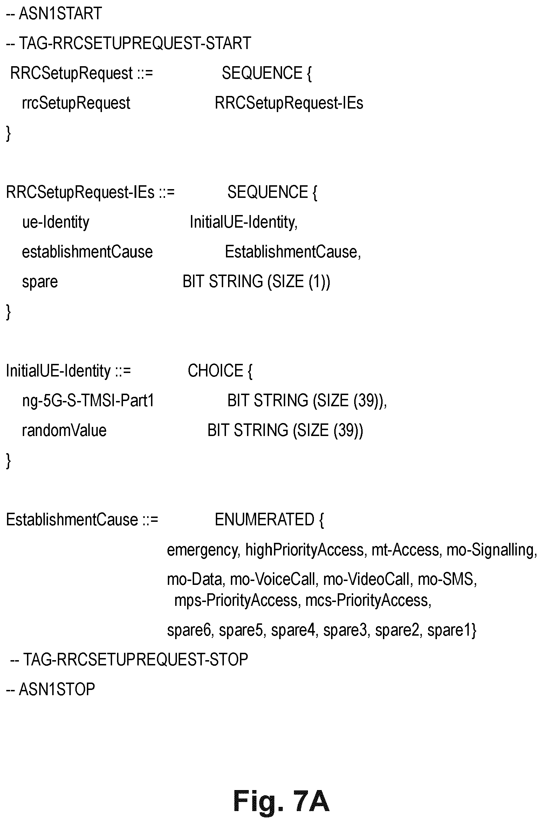

**FIG. 7A** presents an example of an encoding schema for the RRCSetupRequest message in accordance with an example of the present subject matter. The RRCSetupRequest message may, for example, be used for performing the profile-based connection operation. For example, the RRCSetupRequest message may be used by a UE to initiate the establishment of an RRC connection with a 6G network. This may be implemented by encoding of 5G RRC message with 6G specific amendments for enabling 6G access type indication, based on RRC profiles. FIG. 7A may provide an example implementation of the encoding operation.

The RRCSetupRequest message may be transmitted using the signaling radio bearer SRBO, employ the TM mode of the RLC service access point, and may be carried on the CCCH in the uplink direction.

The RRCSetupRequest message structure begins with the RRCSetupRequest root element, defined as a sequence of information elements (RRCSetupRequest-IEs). This sequence includes the UE identity (of type InitialUE-Identity), the EstablishmentCause, and a one-bit spare field. The UE identity is expressed as a choice between two 39-bit bit strings, representing either a partial NG-5G-S-TMSI or a random value. The EstablishmentCause field is an enumerated type that includes standard connection causes such as emergency, data, and voice access, along with spar fields, spare6, spare5, and spare4, which may be used for extended use. These spare fields may be repurposed for carrying RRC profile selection intent, enabling the reuse of existing 5G message structures for profile-aware connection setup while preserving backward compatibility.

**FIG. 7B** provides a mapping table that defines semantic associations between selected spare values in the EstablishmentCause field and specific radio resource control profile selections.

The table shows that spare4, spare5, and spare6 are redefined as rrc-ProfileSelection1, rrc-ProfileSelection2, and rrc-ProfileSelection3, respectively. Each of these newly interpreted field names corresponds to a distinct RRC configuration, consisting of a defined set of parameters and their associated values. For instance, rrc-ProfileSelection1 triggers the application of RRC Configuration 1, while rrc-ProfileSelection3 corresponds to Configuration 3. This remapping approach may enable the signaling of specific profile-based configuration requests using preexisting fields within the standardized 5G RRCSetupRequest message structure.

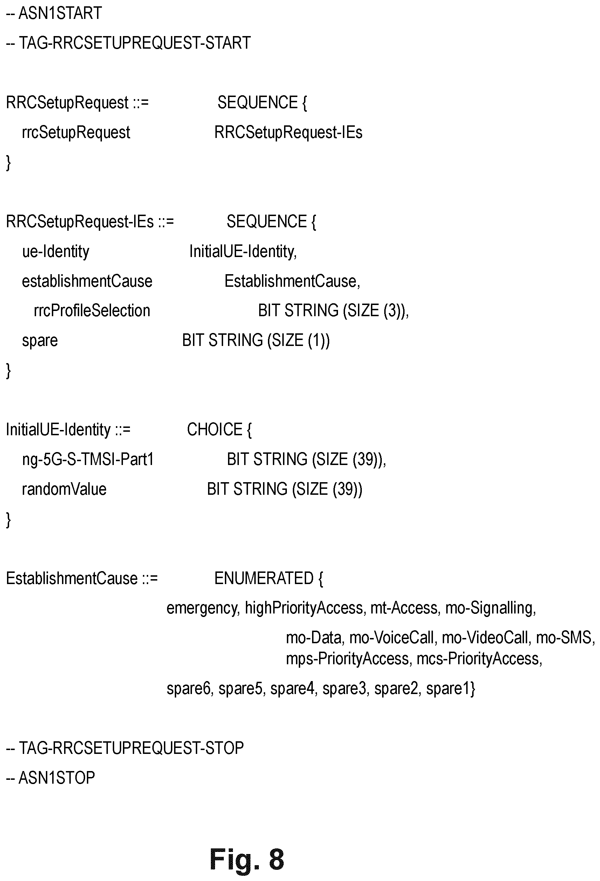

**FIG. 8** presents an example of an encoding schema for the RRCSetupRequest message in accordance with an example of the present subject matter. The RRCSetupRequest message may, for example, be used for performing the profile-based connection operation. For example, the RRCSetupRequest message may be used by a UE to initiate the establishment of an RRC connection with a 6G network. FIG. 8 may provide an example implementation of the encoding operation.

The RRCSetupRequest message may be obtained from the RRCSetupRequest message of FIG. 7A by incorporating an additional field, rrcProfileSelection, to explicitly convey the UE's preferred radio resource control profile to the network. The enhancement in this schema may be the introduction of the rrcProfileSelection field, defined as a 3-bit bit string, which allows the UE to indicate one of up to eight possible RRC profiles. Specifically, the rrcProfileSelection indicates the RRC profile preferred by the UE when setting up the connection to the network. It provides the establishment cause for the RRCSetupRequest in accordance with the RRC layer determination for establishing connection based on RRC configuration identifier. The EstablishmentCause field provides the establishment cause for the RRCSetupRequest in accordance with the information received from upper layers. For example, a gNB is not expected to reject an RRCSetupRequest due to unknown cause value being used by the UE.

This approach may enable the profile selection to be communicated independently of the EstablishmentCause field, offering increased granularity and flexibility. The added field may enable more expressive signaling of UE intent during initial access or resume procedures and support scalable profile-driven configuration frameworks.

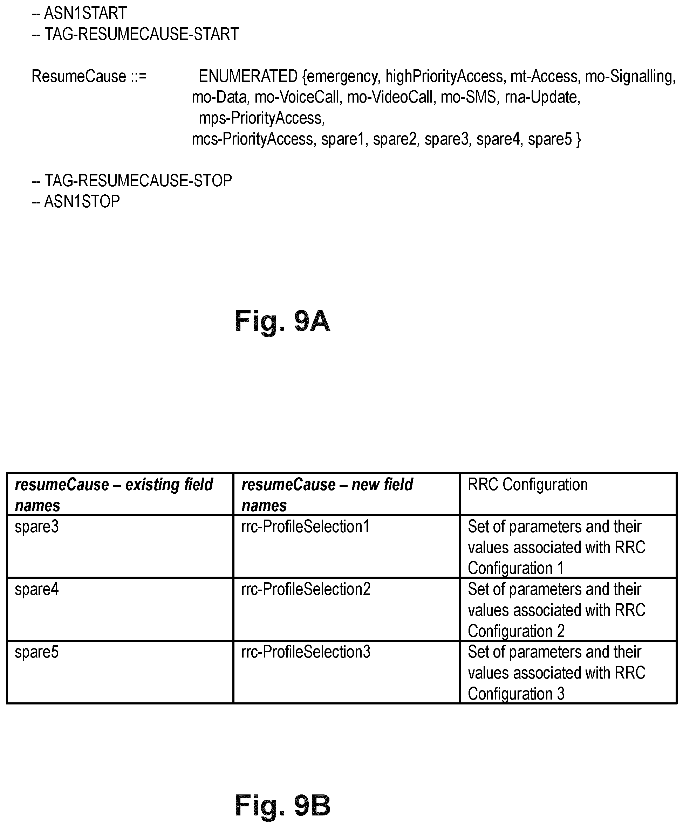

**FIG. 9A** presents an example of an encoding schema for radio resource control resume (RRCResumeRequest) request messages in accordance with an example of the present subject matter. The RRCResumeRequest message may, for example, be used for performing the profile-based connection operation. For example, the RRCResumeRequest message may be used by a UE to resume an RRC connection with a 6G network. FIG. 9A may provide an example implementation of the encoding operation.

The RRCResumeRequest message may be transmitted using the signaling radio bearer SRBO, employ the TM mode of the RLC service access point, and may be carried on the CCCH in the uplink direction.

Only the ResumeCause information element for simplification purpose. The ResumeCause information element may enable a UE to indicate the cause for resuming a radio resource control connection. The ResumeCause is defined as an enumerated type with predefined values representing different access motivations, including emergency, data, voice, video call, SMS, and signaling-related events. In addition to these conventional values, the schema includes spare fields, specifically spare3, spare4, and spare5, which may be repurposed to signal profile selection preferences for resuming RRC connections. This reuse may allow the UE to implicitly indicate a preferred RRC profile by encoding the selection directly into the resume cause, thereby eliminating the need for additional signaling fields. This approach may particularly be beneficial when a 5G UE resumes a connection to a 6G network from RRC_INACTIVE state, and enable the network to interpret and apply the appropriate RRC configuration based on the indexed profile selection.

**FIG. 9B** provides a semantic mapping of the spare fields defined in the ResumeCause enumeration shown in FIG. 9A to specific RRC profile identifiers and corresponding configuration sets. In this example, spare3, spare4, and spare5 are reinterpreted as rrc-ProfileSelection1, rrc-ProfileSelection2, and rrc-ProfileSelection3, respectively. Each mapped profile identifier corresponds to a predefined RRC configuration containing a specific set of parameters and values. By leveraging existing spare values, the design achieves backward compatibility with existing message formats while extending functionality to support scalable, profile-driven resume procedures.

**FIG. 10** presents an example of an encoding schema for radio resource control resume request message in accordance with an example of the present subject matter. The RRCResumeRequest message may, for example, be used for performing the profile-based connection operation. For example, the RRCResumeRequest message may be used by a UE to resume an RRC connection with a 6G network. FIG. 10 may provide an example implementation of the encoding operation.

The RRCResumeRequest message may be transmitted using the signaling radio bearer SRBO, employ the TM mode of the RLC service access point, and may be carried on the CCCH in the uplink direction.

The root element RRCResumeRequest is defined as a sequence containing RRCResumeRequest-IEs, which include the resume identity (ShortI-RNTI-Value), a 16-bit resume MAC-I for integrity verification, the ResumeCause field to indicate the reason for the resume procedure, and a newly introduced rrcProfileSelection field defined as a 3-bit bit string. The resumeCause field may provides the resume cause for the RRC connection resume request as provided by the upper layers or RRC. The network is not expected to reject an RRCResumeRequest due to unknown cause value being used by the UE. The rrcProfileSelection field indicates the RRC profile preferred by the UE when resuming the connection to the network. It provides the resume cause or "re-establishment" cause for the RRCResumeRequest in accordance with the RRC layer determination for establishing connection based on RRC Configuration identifier. This field may allow the UE to explicitly indicate the preferred RRC profile to the network from up to eight possible options. The spare field, defined as a 1-bit bit string, may be reserved for future extension. The inclusion of the rrcProfileSelection field may support flexible and scalable signaling by enabling the UE to specify its configuration preference directly during the resume request.

Hence, the provided examples for defining the profiles and encoding them in signaling messages may advantageously be used to enable flexible and interoperable connection procedures. For example, in case there are 6G nodes that support both RRC Request encodings (5G and 6G) due to multi-RAT capability, it may be possible that there is just one RRC Profile to be used, i.e. a default one, with standardized values defined in specification for the configuration parameters values settings as with the table of FIG. 4. For compatibility, it may be defined that in any RRC Request message formatting a certain code point is assigned to the query for RRC Default Profile. Then, even legacy 5G RRC Request message (Setup or Resume) may be used by implicit association and mapping to RRC profiling related request. For instance, it may be defined as a meaning of 5G RRC Request message that "mo-Data" cause should be used by the 6G network as a request for RRC Default Profile. Otherwise, different and indexed RRC profiles (as with the table of FIG. 5) define different values of particular RRC configuration parameters and their groups or subgroups. The indexing of RRC profile may be ranked in a certain order, where the higher index value may be assigned to a more operationally demanding configuration. For example, one RRC profile associated with emergency, may be given the index of 1, the other profile for high priority access may be given the index of 2, the other RRC profile associated with power saving may be given the index of 3, initial provision of MBB services may be given the index of 4 and yet the other profile for low latency and high reliability may be given the index of 5, and yet another profile may be given for UE Type such as Low Power WideBand area. The indexing of RRC configuration may also provide a mechanism to recommend certain configurations (profiles) parameters sets (e.g. in step A-3) or select a preferred RRC profile by the UE itself (in step B-3). In 6G RRC protocol that may not support the same set of Establishment or Resume Causes as 5G (as shown in Encoding 6G RRC message example), cause values may contain fields that facilitate indicating more RRC profiles for selection of different RRC configurations. In 6G Request, dedicated specifically for 5G UE (that is either 5G RRC protocol-like or support the same set of 5G causes), limited set of Establishment or Resume Causes for RRC profiling can be defined. Though, in any possible realization defining specific fields can be adopted to RRCSetupRequest, RRCResumeRequest or RRCReestablishmentRequest to enable for the UE to indicate a default, selected or referred RRC profile to the network when it connects/reconnects to the 6G RAN. For instance, for 5G UEs resuming the connection from INACTIVE mode, it may be possible to reuse the Resume Cause included in the RRC Resume request to possible to reserve 3 fields to indicate the preferred RRC profile from a selection of 3 options with the profiles ranked and indexed by the network according to their usage or to reserve one field to indicate the preferred RRC profile while accessing 6G RAN.

In **FIG. 11****,** a block circuit diagram illustrating a configuration of an apparatus 1070 is shown, which is configured to implement at least part of the present subject matter. The apparatus may be a user equipment. It is to be noted that the apparatus 1070 shown in FIG. 11 may comprise several further elements or functions besides those described herein below, which are omitted herein for the sake of simplicity as they are not essential for the understanding. Furthermore, the apparatus may be also another device having a similar function, such as a chipset, a chip, a module etc., which can also be part of an apparatus or attached as a separate element to the apparatus 1070, or the like. The apparatus 1070 may comprise a processing function or processor, or controller 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and instructions, such as programs to be executed by the processor 1071 and/or as a working storage of the processor 1071.

The processor 1071 is configured to execute processing related to the above described subject matter. In particular, the apparatus 1070 may be configured to perform the method as described in connection with FIG. 1.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. An apparatus, comprising at least one processor; and at least one memory storing instructions that, when executed by the at least one processor, cause the apparatus at least to:
obtain radio access information in accordance with a first radio access technology or in accordance with a second radio access technology, the radio access information indicating one or more radio resource control profiles supported in the second radio access technology, each radio resource control profile indicating radio resource control configuration parameters;
request from an access node a connection with the access node, the access node being configured to operate in the second radio access technology, the request indicating a radio resource control profile of the one or more radio resource control profiles for enabling establishment of the connection configured in accordance with at least part of the radio resource control profile.

2. The apparatus of claim 1, wherein the instructions, when executed by the at least one processor, further cause the apparatus to:
obtain from a first access node configured to operate in the first radio access technology the radio access information in at least one of the following: a broadcast system information message, a radio resource control reconfiguration message, a radio resource control release message, or other dedicated signalling.

3. The apparatus of any of the preceding claims, the radio access information further indicating access assistance information to identify the access node, wherein the instructions, when executed by the at least one processor, further cause the apparatus to request the connection using the access assistance information.

4. The apparatus of claim 2 or 3, wherein the instructions, when executed by the at least one processor, further cause the apparatus to:
receive from the first access node a redirection indication to the access node, and perform the request of the connection based on the redirection indication.

5. The apparatus of claim 4, wherein the instructions, when executed by the at least one processor, further cause the apparatus to:
receive the redirection indication in the radio resource control release message for releasing a connection between the apparatus and the first access node.

6. The apparatus of any of the preceding claims, wherein the instructions, when executed by the at least one processor, further cause the apparatus to: before performing the request:
initiate an access procedure with the access node if the apparatus is in an inactive mode without having previously established a connection with the access node or is in an idle mode.

7. The apparatus of any of the preceding claims, wherein the radio resource control profile is indicated as a default profile in the radio access information.

8. The apparatus of any of the preceding claims 1 to 6, wherein the instructions, when executed by the at least one processor, further cause the apparatus to:
select the radio resource control profile in accordance with criteria defined in the radio access information.

9. The apparatus of any of the preceding claims, wherein the instructions, when executed by the at least one processor, further cause the apparatus to perform the request comprising:
sending a radio resource control setup message or sending a radio resource control resume request message to the access node.

10. The apparatus of claim 9, wherein the instructions, when executed by the at least one processor, further cause the apparatus to:
in response to sending the radio resource control setup request message, receive from the access node a radio resource control setup message and in response thereto send a radio resource control setup complete message to the access node.

11. The apparatus of claim 9, wherein the instructions, when executed by the at least one processor, further cause the apparatus to:
in response to sending the radio resource control resume request message receive from the access node a radio resource control resume message and in response thereto send a radio resource control resume complete message to the access node.

12. The apparatus of any of the preceding claims 9 to 11, wherein the radio resource control profile is encoded either as a value within an existing establishment cause information element in the request, or as a value of a dedicated information element included in the request.

13. The apparatus of any of the preceding claims 1 to 8, wherein the instructions, when executed by the at least one processor, further cause the apparatus to:
send the request in a single message.

14. The apparatus of any of the preceding claims, wherein the instructions, when executed by the at least one processor, further cause the apparatus to perform a cell reselection of a cell served by the access node for synchronization with the cell.

15. A method comprising:
obtaining radio access information in accordance with a first radio access technology or in accordance with a second radio access technology, the radio access information indicating one or more radio resource control profiles supported in a second radio access technology, each radio resource control profile indicating radio resource control configuration parameters;
requesting from an access node a connection with the access node, the access node being configured to operate in the second radio access technology, the request indicating a specific radio resource control profile of the one or more radio resource control profiles for enabling establishment of the connection configured in accordance with at least part of the specific radio resource control profile.

16. A computer program product comprising processor executable instructions for causing an apparatus for performing the method of claim 15.

17. An apparatus configured to operate in accordance with a second radio access technology, the apparatus comprising at least one processor; and at least one memory storing instructions that, when executed by the at least one processor, cause the apparatus at least to:
receive a request of a connection from another apparatus, the request indicating a radio resource control profile supported in the second radio access technology;
enabling the connection configured in accordance with at least part of the radio resource control profile.

18. The apparatus of claim 17, being further configured to operate in accordance with a first radio access technology.

19. A method comprising:
receiving by an apparatus configured to operate in accordance with a second radio access technology a request of a connection, the request indicating a radio resource control profile supported in the second radio access technology; enabling the connection configured in accordance with at least part of the radio resource control profile.

20. A computer program product comprising processor executable instructions for causing an apparatus for performing the method of claim 19.

21. An apparatus configured to operate in accordance with a first radio access technology, the apparatus comprising at least one processor; and at least one memory storing instructions that, when executed by the at least one processor, cause the apparatus at least to:
send in accordance with the first radio access technology to another apparatus radio access information, the radio access information indicating one or more radio resource control profiles supported in a second radio access technology, each radio resource control profile indicating radio resource control configuration parameters.

## Amended claims

### Amended claims in accordance with Rule 137(2) EPC.

1. An apparatus, (1070), comprising at least one processor (1071); and at least one memory (1073) storing instructions that, when executed by the at least one processor (1071), cause the apparatus (1070) at least to:
obtain radio access information (101) in accordance with a first radio access technology or in accordance with a second radio access technology, the radio access information indicating one or more radio resource control profiles supported in the second radio access technology, each radio resource control profile indicating radio resource control configuration parameters;
request (103) from an access node a connection with the access node, the access node being configured to operate in the second radio access technology, the request indicating a radio resource control profile of the one or more radio resource control profiles for enabling establishment of the connection configured in accordance with at least part of the radio resource control profile.

2. The apparatus of claim 1, wherein the instructions, when executed by the at least one processor, further cause the apparatus to:
obtain from a first access node configured to operate in the first radio access technology the radio access information in at least one of the following: a broadcast system information message, a radio resource control reconfiguration message, a radio resource control release message, or other dedicated signalling.

3. The apparatus of any of the preceding claims, the radio access information further indicating access assistance information to identify the access node, wherein the instructions, when executed by the at least one processor, further cause the apparatus to request the connection using the access assistance information.

4. The apparatus of claim 2 or 3, wherein the instructions, when executed by the at least one processor, further cause the apparatus to:
receive from the first access node a redirection indication to the access node, and perform the request of the connection based on the redirection indication.

5. The apparatus of claim 4, wherein the instructions, when executed by the at least one processor, further cause the apparatus to:
receive the redirection indication in the radio resource control release message for releasing a connection between the apparatus and the first access node.

6. The apparatus of any of the preceding claims, wherein the instructions, when executed by the at least one processor, further cause the apparatus to: before performing the request:
initiate an access procedure with the access node if the apparatus is in an inactive mode without having previously established a connection with the access node or is in an idle mode.

7. The apparatus of any of the preceding claims, wherein the radio resource control profile is indicated as a default profile in the radio access information.

8. The apparatus of any of the preceding claims 1 to 6, wherein the instructions, when executed by the at least one processor, further cause the apparatus to:
select the radio resource control profile in accordance with criteria defined in the radio access information.

9. The apparatus of any of the preceding claims, wherein the instructions, when executed by the at least one processor, further cause the apparatus to perform the request comprising:
sending a radio resource control setup message or sending a radio resource control resume request message to the access node.

10. The apparatus of claim 9, wherein the instructions, when executed by the at least one processor, further cause the apparatus to:
in response to sending the radio resource control setup request message, receive from the access node a radio resource control setup message and in response thereto send a radio resource control setup complete message to the access node.

11. The apparatus of claim 9, wherein the instructions, when executed by the at least one processor, further cause the apparatus to:
in response to sending the radio resource control resume request message receive from the access node a radio resource control resume message and in response thereto send a radio resource control resume complete message to the access node.

12. The apparatus of any of the preceding claims 9 to 11, wherein the radio resource control profile is encoded either as a value within an existing establishment cause information element in the request, or as a value of a dedicated information element included in the request.

13. The apparatus of any of the preceding claims 1 to 8, wherein the instructions, when executed by the at least one processor, further cause the apparatus to:
send the request in a single message.

14. The apparatus of any of the preceding claims, wherein the instructions, when executed by the at least one processor, further cause the apparatus to perform a cell reselection of a cell served by the access node for synchronization with the cell.

15. A method comprising:
obtaining radio access information (101) in accordance with a first radio access technology or in accordance with a second radio access technology, the radio access information indicating one or more radio resource control profiles supported in a second radio access technology, each radio resource control profile indicating radio resource control configuration parameters;
requesting (103) from an access node a connection with the access node, the access node being configured to operate in the second radio access technology, the request indicating a specific radio resource control profile of the one or more radio resource control profiles for enabling establishment of the connection configured in accordance with at least part of the specific radio resource control profile.

16. A computer program product comprising processor executable instructions for causing an apparatus for performing the method of claim 15.

17. An apparatus (1070) configured to operate in accordance with a second radio access technology, the apparatus (1070) comprising at least one processor (1071)and at least one memory (1073) storing instructions that, when executed by the at least one processor (1071), cause the apparatus (1070) at least to:
receive a request of a connection from another apparatus, the request indicating a radio resource control profile supported in the second radio access technology;
enable the connection configured in accordance with at least part of the radio resource control profile.

18. The apparatus of claim 17, being further configured to operate in accordance with a first radio access technology.

19. A method comprising:
receiving by an apparatus configured to operate in accordance with a second radio access technology a request of a connection, the request indicating a radio resource control profile supported in the second radio access technology;
enabling the connection configured in accordance with at least part of the radio resource control profile.

20. A computer program product comprising processor executable instructions for causing an apparatus for performing the method of claim 19.

21. An apparatus (1070) configured to operate in accordance with a first radio access technology, the apparatus (1070) comprising at least one processor (1071); and at least one memory (1073) storing instructions that, when executed by the at least one processor (1071), cause the apparatus (1070) at least to:
send in accordance with the first radio access technology to another apparatus radio access information, the radio access information indicating one or more radio resource control profiles supported in a second radio access technology,
each radio resource control profile indicating radio resource control configuration parameters.
